# EUROPÄISCHE PATENTSCHRIFT

(11) **EP 1 424 233 B1**
(45) Veröffentlichungstag und Bekanntmachung des Hinweises auf die Patenterteilung: **30.06.2010**
(21) Anmeldenummer: 03022486.9
(22) Anmeldetag: 08.10.2003
(51) Int. Cl.: B60J 5/04

(54) **Seitenaufprallträger**
Side impact beam
Poutre contre choc latéral

(30) Priorität: 29.11.2002 DE 10256137
(43) Veröffentlichungstag der Anmeldung: 02.06.2004
(73) Patentinhaber: Benteler Automobiltechnik GmbH, 33102 Paderborn (DE)
(72) Erfinder: Gehringhoff, Ludger, 33106 Paderborn (DE); Schäfers, Johannes, 33178 Borchen (DE)
(74) Vertreter: Ksoll, Peter

(56) Entgegenhaltungen:
- WO-A-02/060712
- US-A- 5 785 376

## Beschreibung

Die Erfindung betrifft einen Seitenaufprallträger gemäß den Merkmalen im Oberbegriff von Patentanspruch 1. Ein solcher Seitenaufprallträger wird in der WO 02/60712 offenbart.

Seitenaufprallträger dienen dem Schutz von Pkw-Insassen vor Verletzungen bei einem seitlichen Anprall. Sie kommen insbesondere als Türverstärkungen zum Einsatz.

Zum Stand der Technik zählt durch die DE 296 22 985 U1 ein Seitenaufprallträger aus einem doppelhutförmig profilierten Metallblech mit zwei Längssicken, deren Schenkel parallel zueinander verlaufen. Der Seitenaufprallträger ist aus kaltumformbarem hochfestem Stahl gefertigt.

Im Belastungsfall weist der Seitenaufprallträger nicht das beste Deformationsverhalten auf. Insbesondere der Übergangsbereich zwischen den beiden Längssicken (Mittelsicke) ist rissgefährdet. Auch kann es zu unkontrollierten Ausknickungen kommen.

Die WO 99/20490 beschreibt einen Träger für ein Kraftfahrzeug, dessen Sicken eine hyperbolische Querschnittsform haben.

Die Seitenaufprallträger sollen die Türstruktur versteifen und Energie beim Seitencrash absorbieren. Bislang ist man davon ausgegangen, dass die Seitenaufprallträger in Abhängigkeit von der Grundkonstruktion des Fahrzeugs eine möglichst hohe Steifigkeit quer zur Fahrtrichtung aufweisen sollen. Bei den bekannten, vornehmlich bei trapezförmigen Profilen hat sich jedoch gezeigt, dass bei Belastung lokal sehr hohe plastische Dehnungen auftreten, die deutlich größer als die Werkstoffabhängig zulässigen Dehnungen sind und somit zu Rissen bis zum Versagen der Bauteile führen. Die auftretenden plastischen Dehnungen liegen bei bis zu 40 %, wohingegen bei höchstfesten Stählen die zulässigen Dehnungen nur maximal 10 % betragen dürfen. Das Verformungsverhalten erscheint folglich verbesserungswürdig.

Der Erfindung liegt daher ausgehend vom Stand der Technik die Aufgabe zugrunde, einen im Crashverhalten verbesserten Seitenaufprallträger zu schaffen mit einem belastungsoptimierten Querschnitt und homogenem Verformungsverhalten.

Die Lösung dieser Aufgabe besteht in einem Seitenaufprallträger gemäß den Merkmalen von Patentanspruch 1.

Erfindungscharakteristisch ist, dass die miteinander verbundenen Schenkel der Sicken zueinander V-förmig angeordnet sind und einen Öffnungswinkel zwischen 25° und 60° einschließen. Die durch den Mittelsteg verbundenen Schenkel sind kürzer als die einander abgewandten äußeren Schenkel der Sicken.

Hieraus resultiert ein besseres homogenes Verformungsverhalten, wobei die V-förmig verbundenen Schenkel aufspreizen bis hin zu einem Umlegen oder Einfalten der Längssicken. Durch die kontrollierte Deformation des Seitenaufprallträgers insbesondere der V-förmig verbundenen Schenkel der Sicken (Mittelsicke) können die lokal auftretenden plastischen Dehnungen deutlich unterhalb der zulässigen Dehnungen reduziert werden. Eine Schädigung des Seitenaufprallträgers durch Risse ist somit ausgeschlossen.

Bei einem Seitenaufprallträger mit besonders guten Energieabsorptionseigenschaften liegt folglich der Öffnungswinkel zwischen 25° und 60°.

Für die Fertigung der Seitenaufprallträger kommen dünnwandige Metallbleche, insbesondere Stahlbleche, mit einer Dicke zwischen 1,0 mm bis 3,0 mm zum Einsatz. Die erfindungsgemäße Profilgestaltung kann sowohl bei kalt- als auch bei warmgeformten Metallblechen vorgenommen werden.

Die durch den Mittelsteg verbundenen Schenkel sind kürzer als die einander abgewandten äußeren Schenkel der Längssicken ausgeführt. Die sogenannte Mittelsicke ist folglich in der Höhe reduziert. Für die Praxis scheint eine Reduzierung der Höhe von 25 % bis 50 % sinnvoll. Hierdurch können die plastischen Dehnungen ebenfalls deutlich reduziert werden. Somit tritt ein Bauteilversagen durch Risse nicht auf. Insbesondere kann auch das Verformungs- bzw. Steifigkeitsverhalten des Seitenaufprallträgers auf den jeweiligen Anwendungsfall abgestimmt werden.

Das definierte Verformungsverhalten wird weiter verbessert, wenn die Schenkel der Längssicken gerade, also mit linearer Steigung verlaufen, wohingegen die die Schenkel verbindenden Scheitelbereiche und der Mittelsteg bogenförmig gekrümmt sind, wie dies Patentanspruch 2 vorsieht.

Vorzugsweise sind an den Längskanten der äußeren Schenkel quer abstehende Flansche vorgesehen (patentanspruch 3). Die Übergangsbereiche von den Schenkeln zu den Kanten sind gerundet.

Die Erfindung ist nachfolgend anhand von in den Zeichnungen dargestellten Ausführungsbeispielen näher beschrieben. Es zeigen:
- Figur 1: in technisch vereinfachter Darstellungsweise einen vertikalen Querschnitt durch einen Seitenaufprallträgers gemäß Stand der Technik;
- Figur 2: einen vertikalen Querschnitt durch eine Ausführungsform eines erfindungsgemäßen Seitenaufprallträgers und
- Figur 3: in perspektivischer Darstellungsweise einen erfindungsgemäßen Seitenaufprallträger.

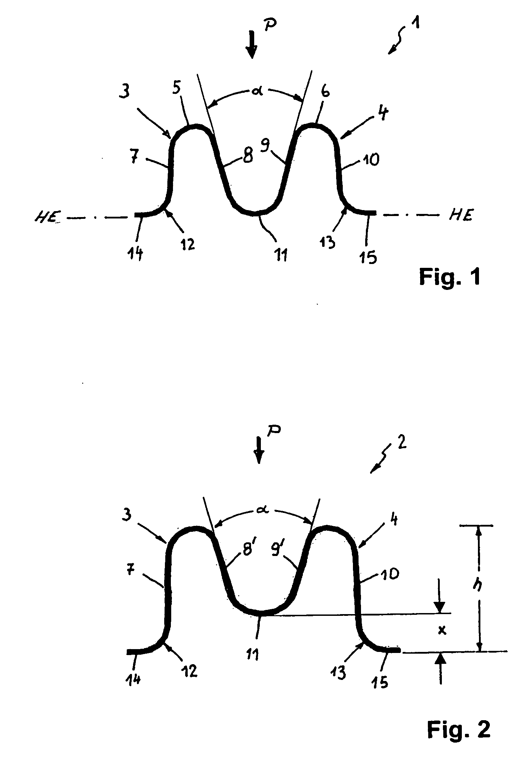

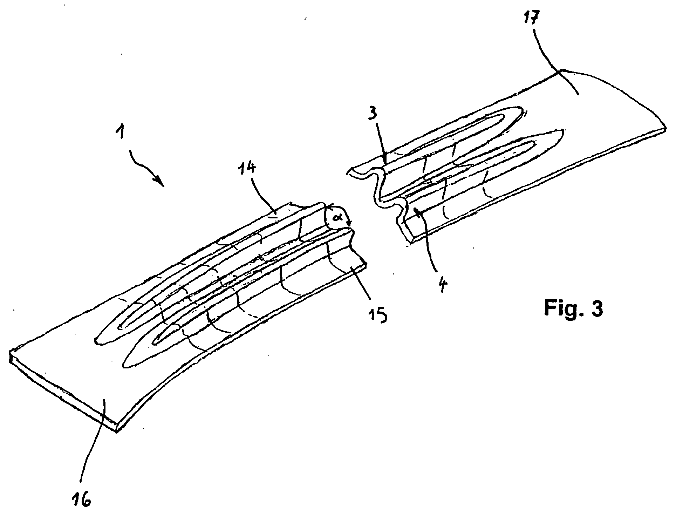

Die Figuren 1 und 2 zeigen jeweils einen vertikalen Querschnitt durch einen Seitenaufprallträger 1 bzw. 2. Diese kommen als Türverstärkung in einer hier nicht näher dargestellten Fahrzeugtür eines Kraftfahrzeugs zum Einsatz. Die Figur 3 zeigt den Seitenaufprallträger 1 in einer Perspektive.

Die Seitenaufprallträger 1, 2 sind kalt- oder warmgeformt aus Stahlblech mit einer Dicke zwischen 1,0 mm und 3,0 mm.

Der Seitenaufprallträger 1 gemäß den Figuren 1 bzw. 3 weist auf dem überwiegenden Teil seiner Länge zwei sich nebeneinander erstreckende Längssicken 3, 4 auf. Wie insbesondere anhand der Figur 1 zu erkennen ist, besitzt jede Längssicke 3, 4 einen bogenförmig gekrümmten Scheitelbereich 5 bzw. 6, an den sich jeweils zu beiden Seiten zwei gerade ausgebildete Schenkel 7, 8 bzw. 9, 10 anschließen. Die beiden Längssicken 3, 4 sind durch einen ebenfalls bogenförmig gekrümmt verlaufenden Mittelsteg 11 einstückig miteinander verbunden. An den Längskanten 12, 13 der äußeren Schenkel 7 bzw. 10 sind quer abstehende Flansche 14, 15 vorgesehen. Der Übergang von den Schenkeln 7, 10 zu den Flanschen 14, 15 entlang der Längskanten 12, 13 ist gerundet.

Die miteinander über den Mittelsteg 11 verbundenen Schenkel 8 und 9 sind zueinander V-förmig angeordnet und schließen einen Öffnungswinkel α ein, der größer oder gleich 25° ist. Der maximale Öffnungswinkel α wird für die Praxis bei 60° gesehen. Diese Formgebung führt dazu, dass sich die Schenkel 8, 9 bei einem Anprall aus Richtung gemäß dem Pfeil P aufspreizen und sich die Längssicken 3, 4 je nach Stärke der Belastung seitlich umlegen. Auf diese Weise kann ein hoher Anteil der Anprallenergie in Verformungsarbeit umgewandelt werden.

Die einander abgewandten äußeren Schenkel 7 bzw. 10 der Sicken 3 bzw. 4 verlaufen im wesentlichen parallel zueinander und sind in Bildebene gesehen vertikal zur sich durch die Flansche 14, 15 erstreckenden Horizontalebene HE ausgerichtet.

Der Seitenaufprallträger 2 gemäß Figur 2 entspricht vom konzeptionellen Aufbau dem vorstehend beschriebenen Seitenaufprallträger 1. Demzufolge sind gleichartige Bauteilkomponenten mit den gleichen Bezugszeichen versehen.

Auch der Seitenaufprallträger 2 besteht aus einem profilierten Metallblech mit zwei Längssicken 3, 4. Jede Längssicke 3, 4 weist einen bogenförmig gekrümmten Scheitelbereich 5, 6 auf. An den Längskanten 12, 13 der äußeren Schenkel 7, 10 sind quer abstehende Flansche 14, 15 vorgesehen.

Man erkennt, dass die durch den Mittelsteg 11 verbundenen Schenkel 8', 9' kürzer als die einander abgewandten äußeren Schenkel 7, 10 der Längssicken 3, 4 sind. In dem hier dargestellten Beispiel beträgt der Höhenunterschied x zwischen dem Mittelsteg 11 und den Flanschen etwa ein Drittel der gesamten Höhe h des Seitenaufprallträgers.

Die über den Mittelsteg 11 verbundenen Schenkel 8', 9' sind V-förmig zueinander angeordnet und schließen einen Öffnungswinkel α zwischen 25° und 60° ein.

Die V-förmige Anordnung der mittleren Schenkel 8', 9' gewährleistet ein definiertes Verformungsverhalten. Bei einem Seitencrash spreizen sich die Schenkel 8', 9' auf und die Längssicken 3, 4 werden voneinander weg in Bildebene nach links bzw. rechts umgeformt. Auf diese Weise wird die Anprallenergie in hohem Maße durch die Verformung des Seitenaufprallträges 2 aufgezehrt. Kritische Spannungen bzw. Dehnungen werden abgebaut und die Riss- bzw. Ausknickneigung des Seitenaufprallträgers vermindert.

Anhand der Figur 3 erkennt man des Weiteren, dass der Seitenaufprallträger 1 jeweils endseitig einen flach ausgestalteten verbreiterten Endabschnitt 16 bzw. 17 aufweist. Mit den Endabschnitten 16, 17 wird der Seitenaufprallträger 1 in der Fahrzeugstruktur festgelegt und hierbei üblicherweise im Türrahmen verschweißt.

Die Höhe der Längssicken 3, 4 nimmt zu den Endabschnitten 16, 17 hin mit einem gleichmäßigen Konturverlauf ab und läuft in deren Ebene aus.

### Bezugszeichenaufstellung

- 1 -: Seitenaufprallträger
- 2 -: Seitenaufprallträger
- 3 -: Längssicke
- 4 -: Längssicke
- 5 -: Scheitelbereich
- 6 -: Scheitelbereich
- 7 -: Schenkel
- 8 -: Schenkel
- 8' -: Schenkel
- 9 -: Schenkel
- 9' -: Schenkel
- 10 -: Schenkel
- 11 -: Mittelsteg
- 12 -: Längskante
- 13 -: Längskante
- 14 -: Flansch
- 15 -: Flansch
- 16 -: Endabschnitt
- 17 -: Endabschnitt

- h -: Höhe v. 2
- HE -: Horizontalebene
- P -: Pfeil
- x -: Höhenunterschied
- α -: Öffnungswinkel

## Patentansprüche

1. Seitenaufprallträger zur Eingliederung in ein Kraftfahrzeug, insbesondere in eine Fahrzeugtür, welcher aus einem profilierten Metallblech mit zumindest zwei Längssicken (3, 4) besteht, wobei jede Längssicke (3, 4) einen Scheitelbereich (5, 6) sowie zwei Schenkel (7, 8, 8, 9, 9', 10) aufweist und die einander benachbarten Schenkel (8, 8' 9, 9') der Längssicken (3, 4) durch einen Mittelsteg (11) miteinander verbunden sind, wobei die miteinander verbundenen Schenkel (8, 8', 9, 9') zueinander V-förmig angeordnet sind und einen Öffnungswinkel (α) zwischen 25° bis 60° einschließen, **dadurch gekennzeichnet, dass** die durch den Mittelsteg (11) verbundenen Schenkel (8', 9') kürzer als die einander abgewandten äußeren Schenkel (7, 10) der Sicken (3, 4) sind.

2. Seitenaufprallträger nach Anspruch 1, **dadurch gekennzeichnet, dass** die Schenkel (7, 8, 8, 9, 9', 10) der Längssicken (3, 4) gerade ausgebildet und die Scheitelbereiche (5, 6) sowie der Mittelsteg (11) bogenförmig gekrümmt sind.

3. Seitenaufprallträger nach Anspruch 1 oder 2, **dadurch gekennzeichnet, dass** an den Längskanten (12, 13) der äußeren Schenkel (7, 10) quer abstehende Flansche (14, 15) vorgesehen sind.

## Claims

1. Side impact beam for integration into a motor vehicle, in particular in a vehicle door, which consists of a profiled metal sheet with at least two longitudinal beads (3, 4), each longitudinal bead (3, 4) having an apex area (5, 6) and two limbs (7, 8, 8', 9, 9', 10) and the adjacent limbs (8, 8', 9, 9') of the longitudinal beads (3, 4) being joined together by a central web (11), the connected limbs (8, 8' 9, 9') being arranged in the shape of a V with respect to each other and enclosing an opening angle (α) of between 25° and 60°, **characterised in that** the limbs (8', 9') connected by the central web (11) are shorter than the outer limbs (7, 10) of the beads (3, 4), said limbs facing away from each other.

2. Side impact beam according to claim 1, **characterised in that** the limbs (7, 8, 8', 9, 9',10) of the longitudinal beads (3, 4) are straight by design and the apex areas (5, 6) and the central web (11) are curved in the form of an arc.

3. Side impact beam according to claim 1 or 2, **characterised in that** flanges (14, 15) projecting at an angle are provided on the longitudinal edges (12,13) of the outer limbs (7, 10).

## Revendications

1. Élément d'encaissement d'impact latéral destiné à être intégré dans un véhicule automobile, en particulier dans une porte de véhicule, qui est constitué d'une tôle métallique profilée avec au moins deux moulures longitudinales (3, 4), dans lequel chaque moulure longitudinale (3, 4) comporte une région de sommet (5, 6) ainsi que deux branches (8, 8', 9, 9', 10) et les branches mutuellement voisines (8, 8', 9, 9') des moulures longitudinales (3, 4) sont reliées l'une à l'autre par une barrette médiane (11), dans lequel les branches (8, 8', 9, 9') mutuellement reliées sont agencées l'une par rapport à l'autre en formant un V et définissent un angle d'ouverture (α) entre 25° et 60°, **caractérisé en ce que** les branches (8', 9') reliées par la barrette médiane (11) sont plus courtes que les branches extérieures (7, 10), détournées l'une de l'autre, des moulures (3, 4).

2. Élément d'encaissement d'impact latéral selon la revendication 1, **caractérisé en ce que** les branches (7, 8, 8', 9, 9', 10) des moulures longitudinales (3, 4) sont réalisées rectilignes et les régions de sommet (5, 6) ainsi que la barrette médiane (11) sont coudées sous forme arquée.

3. Élément d'encaissement d'impact latéral selon la revendication 1 ou 2, **caractérisé en ce que** des brides (14, 15) en dépassement transversal sont prévues au niveau des arêtes longitudinales (12, 13) des branches extérieures (7, 10).
